# EUROPEAN PATENT APPLICATION

(11) **EP 4 827 067 A1**
(43) Date of publication of application: **21.10.2026**
(21) Application number: 24902799.6
(22) Date of filing: 10.12.2024
(51) Int. Cl.: H04L 51/02

(54) **INTERACTION METHODS, APPARATUSES, DEVICE, AND STORAGE MEDIUM**

(30) Priority: 11.12.2023 CN 202311698044
(71) Applicant: Beijing Zitiao Network Technology Co., Ltd., Beijing 100190 (CN)
(72) Inventor: WAN, Shiqi, Beijing 100028 (CN); ZHANG, Chengcheng, Beijing 100028 (CN)
(74) Representative: Marks & Clerk LLP
(86) International application number: PCT/CN2024/138134
(87) International publication number: WO 2025/124378

(57) **Abstract**

Embodiments of the disclosure relate to a method, an apparatus, a device, and a storage medium for interaction. The method proposed here includes: providing a first chat entry in a target interface associated with a target user; presenting a first chat window with a virtual object based on a selection of the first chat entry, the virtual object being created based on a configuration operation of the target user, the virtual object being associated with the target user; and providing a second message from the virtual object in the first chat window based on a first message input by a current user in the first chat window, where the second message is generated based on the first message.

## Description

The present application claims priority to Chinese Patent Application No. 202311698044.1, filed on December 11, 2023, and entitled "INTERACTION METHOD, APPARATUS, DEVICE, AND STORAGE MEDIUM", which is incorporated herein by reference in its entirety.

### TECHNICAL FIELD

Example embodiments of the present disclosure generally relate to the field of computers, and in particular, to methods, apparatuses, a device, and a computer-readable storage medium for interaction.

### BACKGROUND

With the development of computer technologies, Internet has become an important platform for people to interact information. For example, people may exchange messages with other users through, for example, instant messaging services (e.g., private messages).

### SUMMARY

In a first aspect of the present disclosure, a method of interaction is provided. The method includes: providing a first chat entry in a target interface associated with a target user; presenting a first chat window with a virtual object based on a selection of the first chat entry, the virtual object being created based on a configuration operation of the target user, the virtual object being associated with the target user; and providing, based on a first message input by a current user in the first chat window, a second message from the virtual object in the first chat window, where the second message is generated based on the first message.

In a second aspect of the present disclosure, a method of interaction is provided. The method includes: presenting a third chat window between a target user and a virtual object; and posting the virtual object associated with a target object based on a first predetermined operation of the target user on a configuration control in the third chat window, such that a target interface associated with the target user provides a first chat entry for initiating a chat with the virtual object, the virtual object being associated with the target user.

In a third aspect of the present disclosure, an apparatus for interaction is provided. The apparatus includes: a first providing module configured to provide a first chat entry in a target interface associated with a target user; a first presenting module configured to present a first chat window with a virtual object based on a selection of the first chat entry, the virtual object being created based on a configuration operation of the target user, the virtual object being associated with the target user; and a second providing module configured to provide, based on a first message input by a current user in the first chat window, a second message from the virtual object in the first chat window, where the second message is generated based on the first message.

In a fourth aspect of the present disclosure, an apparatus for interaction is provided. The apparatus includes: a second presenting module configured to present a third chat window between a target user and a virtual object; and an object posting module configured to post the virtual object associated with a target object based on a first predetermined operation of the target user on a configuration control in the third chat window, such that a target interface associated with the target user provides a first chat entry for initiating a chat with the virtual object, the virtual object being associated with the target user.

In a fifth aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect or the second aspect.

In a sixth aspect of the present disclosure, a computer-readable storage medium is provided. The computer-readable storage medium has a computer program stored thereon, and the computer program is executable by a processor to implement the method of the first aspect or the second aspect.

It should be understood that the content described in this summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
FIG. 1 shows a schematic diagram of an example environment in which the embodiments according to the present disclosure may be implemented;
FIGS. 2A to 2E show example interfaces according to some embodiments of the present disclosure;
FIGS. 3A to 3C show example interfaces according to still some embodiments of the present disclosure;
FIGS. 4A and 4B show flowcharts of example processes of interaction according to some embodiments of the present disclosure;
FIGS. 5A and 5B show schematic structural block diagrams of apparatuses for interaction according to some embodiments of the present disclosure; and
FIG. 6 shows a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms, and should not be construed as being limited to the embodiments set forth herein; instead, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the titles of any section/subsection provided herein are not restrictive. Various embodiments are described throughout this text, and any type of embodiment may be included under any section/subsection. In addition, the embodiments described in any section/subsection may be combined with any other embodiments described in the same section/subsection and/or different sections/subsections in any manner.

In the description of the embodiments of the present disclosure, the term "include/comprise" and similar terms should be understood as open-ended inclusions, that is, "include/comprise but not be limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user's data, and acquisition and/or use of data, etc. These aspects all follow the corresponding laws, regulations and related provisions. In the embodiments of the present disclosure, all data collection, acquisition, processing, machining, forwarding, use, etc. are carried out under the premise that the user knows and confirms. Accordingly, when implementing various embodiments of the present disclosure, the user should be informed of the type, range of use, use scenarios, etc. of data or information that may be involved, and the authorization of the user should be obtained, through appropriate means according to relevant laws and regulations. The specific way of informing and/or authorizing may be changed according to actual situations and application scenarios, and the scope of the present disclosure is not limited in this regard.

If the solutions in this specification and embodiments involve personal information processing, the processing will be carried out on the premise that there is a legal basis (for example, the consent of the personal information subject is obtained, or it is necessary to perform a contract, etc.), and the processing will only be carried out within the scope of provisions or agreements. If the user refuses to process personal information other than the necessary information required for the basic functions, it will not affect the user's use of the basic functions.

Message interaction is an important interaction behavior on the Internet. For example, people may create chats through instant messaging services, and send and receive messages.

An embodiment of the present disclosure proposes an interaction solution. In an aspect, according to this solution, a first chat entry may be provided in a target interface associated with a target user. Further, a first chat window with a virtual object may be presented based on a selection of the first chat entry, the virtual object is created based on a configuration operation of the target user, and the virtual object is associated with the target user. Accordingly, a second message from the virtual object may be provided in the first chat window based on a first message input by a current user in the first chat window, where the second message is generated based on the first message.

In this way, embodiments of the present disclosure may support dialogue interaction with the virtual object corresponding to the user, thereby improving the interaction efficiency and the interaction effect.

In another aspect, according to this solution, a third chat window between a target user and a virtual object may be presented. Further, the virtual object associated with a target object may be posted based on a first predetermined operation of the target user on a configuration control in the third chat window, such that a target interface associated with the target user provides a first chat entry for initiating a chat with the virtual object. The virtual object is associated with the target user.

In this way, embodiments of the present disclosure may support the user to post the corresponding virtual object to support other users to perform dialogue interaction with the virtual object, thereby improving the interaction efficiency and the interaction effect.

Various example implementations of the solution will be described in detail below in further conjunction with the drawings.

### EXAMPLE ENVIRONMENT

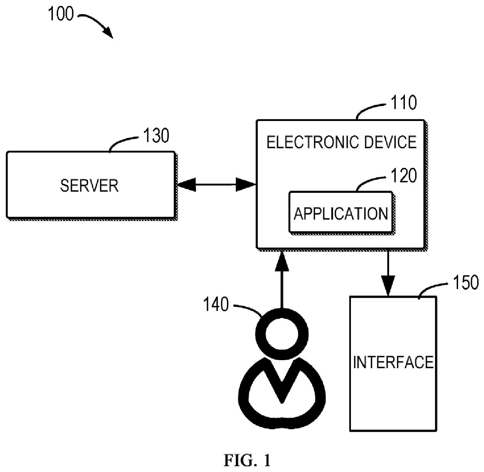

FIG. 1 shows a schematic diagram of an example environment 100 in which the embodiments of the present disclosure may be implemented. As shown in FIG. 1, the example environment 100 may include an electronic device 110.

In this example environment 100, an application 120 supporting interface interaction may be run on the electronic device 110. The application 120 may be any appropriate type of application for interface interaction, examples of which may include but are not limited to: a video application, a social application, or other appropriate applications. A user 140 may interact with the application 120 via the electronic device 110 and/or its attachment devices.

In the environment 100 of FIG. 1, if the application 120 is active, the electronic device 110 may present an interface 150 for supporting interface interaction through the application 120.

In some embodiments, the electronic device 110 communicates with a server 130 to implement the provision of services for the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the electronic device 110 may also support any type of user-specific interface (such as "wearable" circuitry, etc.).

The server 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and the like. The server 130 may provide backstage services for the application 120 supporting a virtual scene in the electronic device 110.

A communication connection may be established between the server 130 and the electronic device 110. The communication connection may be established by wired or wireless means. The communication connection may include, but is not limited to, a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It should be understood that the structure and function of each element in the environment 100 are described for illustrative purposes only, without suggesting any limitation to the scope of the present disclosure.

Some example embodiments of the present disclosure will be described below with continued reference to the drawings.

### CONFIGURATION OF VIRTUAL OBJECT

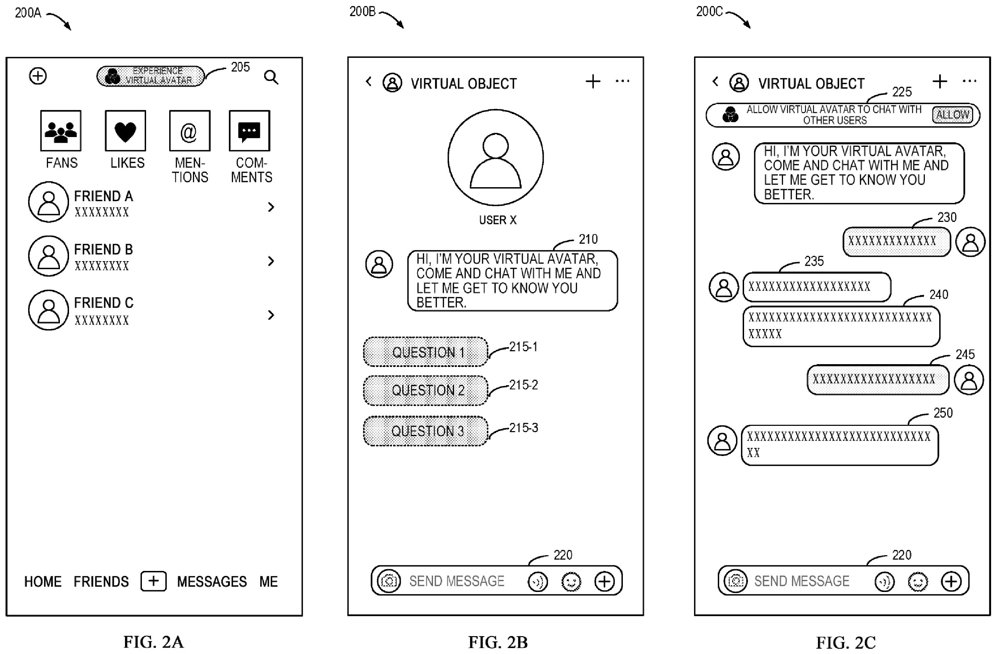

An example process of configuring a virtual object according to the embodiments of the present disclosure will be described below in conjunction with FIGS. 2A to 2E. FIGS. 2A to 2E show example interfaces 200A to 200E according to some embodiments of the present disclosure. The interfaces 200A to 200E may be provided by the electronic device 110 as shown in FIG. 1.

As shown in FIG. 2A, the interface 200A may be a message management interface of a target user, which for example, may be used to present messages between the target user and other users.

In some embodiments, the interface 200A may include a chat entry 205, and the chat entry may be used to initiate a chat between the target user and a corresponding virtual object (also referred to as a virtual avatar). It should be understood that when the chat object is a virtual object, an identification indicating that the virtual image is of a virtual type will be displayed.

For example, upon receiving a selection of the chat entry 205, the electronic device 110 may display the interface 200B as shown in FIG. 2B to present a chat window between the target user and the virtual object.

As shown in FIG. 2B, in this chat, the electronic device 110 may display a message 210 from the virtual object, for example, and the message 210 may include a guidance message, for example, for guiding the user to configure or post the virtual object.

In some embodiments, as shown in FIG. 2B, the electronic device 110 may also provide a set of recommended interaction items in the interface 200B, such as an interaction item 215-1, an interaction item 215-2, and an interaction item 215-3 (individually or collectively referred to as an interaction item 215). Such an interaction item 215 may be used to help the target user to quickly interact with the virtual object.

In some embodiments, the interface 200B may further include an input control 220, and the target user may also input a message to the chat through the input control 220, for example, and may obtain a reply message of the virtual object to the input message.

Specifically, as shown in FIG. 2C, the electronic device 110 may receive a message 230 input by the target user, and the electronic device 110 may accordingly present a message 235 and a message 240 from the virtual object as a reply to the message 230. As yet another example, the electronic device 110 may receive a message 245 input by the target user, and provide a message 250 from the virtual object as a reply.

In some embodiments, the message from the virtual object may be generated using a target model. Such a target model may be implemented using any appropriate machine learning model, examples of which may include, but are not limited to, a language model.

In some embodiments, such a target model may be trained by associated information of the target user. In some examples, the associated information of the target user may be obtained based on reference information determined by the target user. As an example, the server 130 may receive the reference information (for example, text content, video content, audio content, etc.) uploaded by the target user, and may train the target model by using the reference information, such that the target model may generate a corresponding reply according to a style of the target user.

In some embodiments, the associated information of the target user may also be obtained based on historical dialogue information between the target user and the virtual object. Such historical dialogue information may include dialogue messages between the target user and the virtual object. For example, the historical dialogue information may include multiple turns of dialogue messages between the target user and the virtual object as shown in FIG. 2C.

In some embodiments, the target user may indicate the associated information for constructing the virtual object through a configuration operation. As an example, the associated information may include text information associated with the target user, so that the text generated by the virtual object may match the style of the target user.

As another example, the associated information may include audio information associated with the target user, such that the audio content provided by the virtual object may, for example, have a tone corresponding to the target user or a specific tone configured by the target user.

As yet another example, the associated information may also include video information associated with the target user, so that the video content provided by the virtual object may, for example, present a visual image corresponding to the target user or a visual image configured by the target user.

Thus, the target model may be trained to be specific to the target user, and the messages generated by the target model may be made to follow the style of the target user or match relevant information of the target user.

In some embodiments, the electronic device 110 may also present a configuration control 225 for posting the virtual object in the interface 200C. In some embodiments, in the case that the number of historical dialogue messages between the target user and the virtual object reaches a threshold, the electronic device 110 may present the configuration control 225 accordingly.

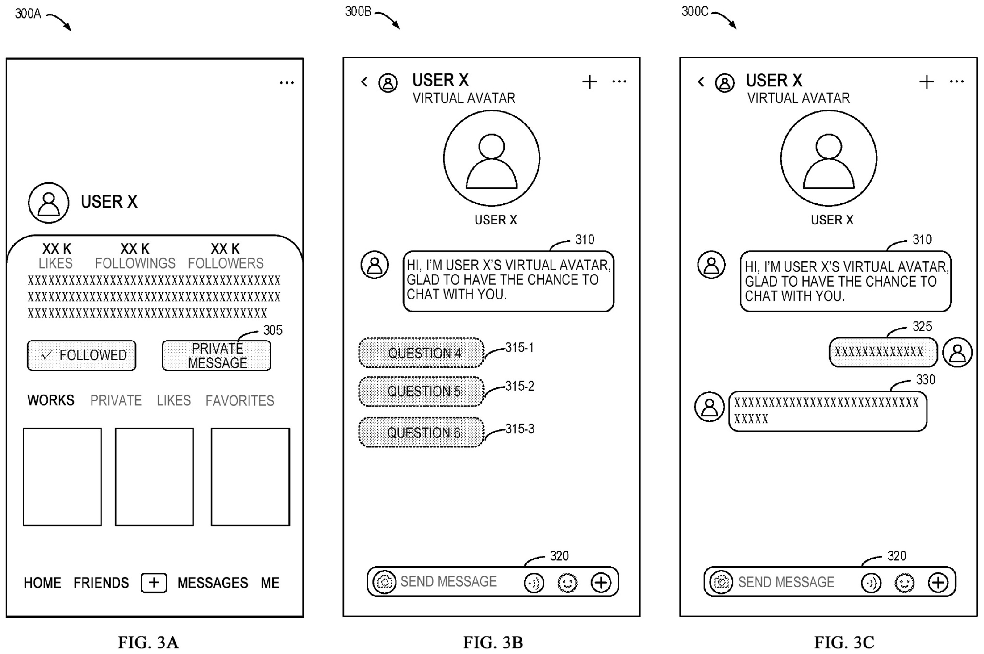

Further, after receiving a predetermined operation of the target user on the configuration control 225 (for example, a selection operation on an "allow" button), the electronic device 110 may post the virtual object associated with the target user object accordingly, so that other users may interact with the virtual object after it is posted. The specific process of other users interacting with the virtual object will be described below with reference to FIGS. 3A to 3C.

In some further embodiments, the target user may also post the virtual object through other appropriate forms of configuration controls. As an example, the target user may actively invoke the configuration panel of the virtual object through an appropriate operation, and may post the virtual object through the configuration control in the configuration panel.

In some other embodiments, the electronic device 110 may also, for example, receive configuration information about the virtual object from the target user. As an example, the electronic device 110 may, for example, obtain at least one configuration information about the virtual object from the target user through the configuration panel.

In some embodiments, the configuration information may indicate whether the virtual object is allowed to reply to the user's message. As an example, in the case that the virtual object is allowed to reply to messages of other users, when other user enters a chat with the virtual object, the virtual object may generate a reply based on the received message from the other user, for example.

In some other embodiments, the configuration information may indicate whether the virtual object is allowed to establish a media conversation (for example, an audio conversation or a video conversation) with the user. In some embodiments, as will be described in detail below, in the case that the virtual object is allowed to establish a media conversation with the user, other users may also have a real-time media conversation with the virtual object, for example.

In some embodiments, as shown in FIG. 2B, the virtual object may also be associated with a corresponding target visual identification (for example, a visual image), for example. The target visual identification may include appropriate two-dimensional visual content and/or three-dimensional visual content, and may be presented in a chat window between the target user or other users and the virtual object. For example, the target visual identification of the virtual object may include its avatar, such as a two-dimensional image; or the target visual identification may include its corresponding three-dimensional model for presentation in a video conversation.

In some examples, the target visual identification may be an object visual identification of the target object, for example, an avatar of the target object.

In some other examples, the target visual identification may be generated based on the object visual identification, and may be different from the object visual identification. For example, an avatar of the virtual object may be generated by processing the avatar of the target object, so that these two have similar visual features but may correspond to different styles. For example, in the case that the avatar of the target object is a photo, the avatar of the virtual object may be, for example, a cartoon-style image of the photo.

In some further embodiments, the target visual identification may be configured by the target object. For example, the target object may configure the target visual identification of the virtual object by uploading an image, generating an image, setting three-dimensional model parameters, etc.

Based on the process described above, the embodiments of the present disclosure may support the user to post a corresponding virtual object for interacting with other users in the platform. Further, the embodiments of the present disclosure may also support the user to appropriately configure such a virtual object according to needs, thereby improving the interaction quality of the virtual object.

As will be described in detail below with reference to FIGS. 3A to 3C, other users may interact with the virtual object corresponding to the target user, for example. Further, the electronic device 110 may also provide a message viewing interface for the target user to display a set of dialogue messages between at least one user and the virtual object.

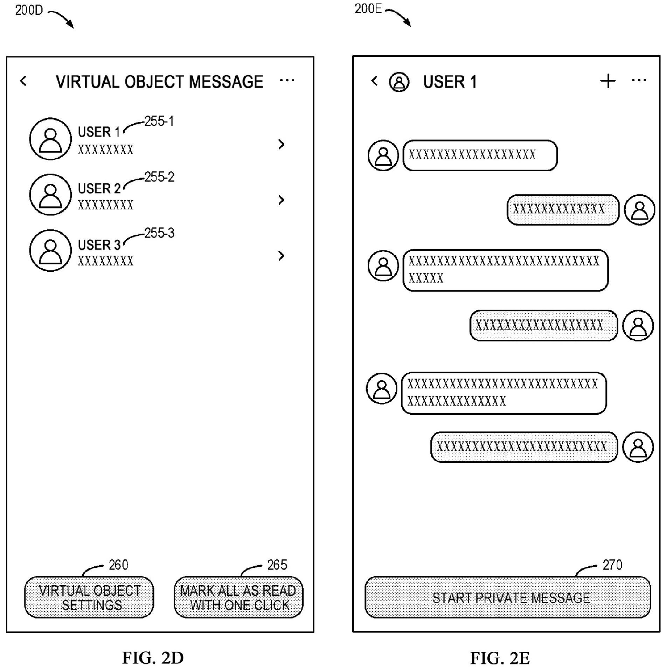

As an example, FIG. 2D shows an example interface 200D according to some embodiments of the present disclosure. As shown in FIG. 2D, the interface 200D may display chat items between one or more users and the virtual object, such as a chat item 255-1, a chat item 255-2, and a chat item 255-3.

Further, the electronic device 110 may also provide a configuration entry 260 in the interface 200D to support the target user to further adjust the configuration information about the virtual object in the case that the virtual object has been posted.

As another example, the electronic device 110 may also include a control 265 to mark all the above chat items as read. On the contrary, if there is an unread new message in a certain chat item, the electronic device 110 may also present an indicator about existence of the unread new message in association with the chat item.

Further, after receiving a selection of the chat item 255-1, the electronic device 110 may display an interface 200E as shown in FIG. 2E. The interface 200E may be used as a message viewing interface corresponding to the chat 255-1, and may be used to display all dialogue messages between "user 1" and the virtual object.

In some embodiments, the electronic device 110 may also provide a chat entry 270 in the interface 200E, and may present a chat window between the target user and the "user 1" based on a selection of the chat entry 270 by the target user.

As an example, if the target user learns through the message viewing interface that some questions that the "user 1" is concerned about may not have been well answered, the target user may enter a private chat window with the "user 1" through the chat entry 270, for example, and may send a message to the "user 1".

In some other embodiments, the target user may also select at least one message from a set of dialogue messages between the "user 1" and the virtual object, and accordingly trigger the display of the chat window with the "user 1". In this case, the chat window of the target user with the "user 1" may present a reference to the at least one selected message, for example, so that the efficiency of message interaction may be further improved.

For example, if the "user 1" fails to obtain an answer to a specific question through the virtual object, the target user may pay attention to the specific question through the message viewing interface, for example, and may enter the chat interface with the virtual object by referencing the specific question, and may send a reply message for the specific question accordingly.

Based on this approach, the embodiments of the present disclosure may further facilitate the target user to manage and view the interaction between the virtual object and other users.

### INTERACTION WITH VIRTUAL OBJECT

The process of interacting with a virtual object according to the embodiments of the present disclosure will be further described below with reference to FIGS. 3A to 3C. FIGS. 3A to 3C show example interfaces 300A to 300C according to some embodiments of the present disclosure. For example, the interfaces 300A to 300C may be provided by the electronic device 110 as shown in FIG. 1.

As shown in FIG. 3A, the interface 300A may be, for example, a target interface associated with a target user (for example, a user X). As an example, it may be a personal homepage of the target user, for example. In some other examples, the target interface may also include other appropriate interfaces associated with the target user, such as a recommendation interface about the target user, a search result page of the target user, and the like.

In some embodiments, as shown in FIG. 3A, the electronic device 110 may provide a chat entry 305 in the interface 300A. In some embodiments, after receiving a selection of the chat entry 305, the electronic device 110 may display an interface 300B as shown in FIG. 3B to present a chat window of the current user with the virtual object corresponding to the target user.

In some embodiments, in the case that an interaction relationship between the current user and the target user satisfies a first predetermined condition, the electronic device 110 may present a chat window between the current user and the virtual object based on the selection of the chat entry 305.

In some embodiments, the interaction relationship may indicate a social relationship between the current user and the target user in the application platform, for example, whether they are friends, whether they follow each other, etc. As an example, if the current user and the target user are not users who follow each other, the current user may enter the chat window with the virtual object by clicking the chat entry 305, for example.

As another example, if the interaction relationship between the current user and the target user satisfies a second predetermined condition, the electronic device 110 may present a chat window with the target user based on the selection of the chat entry 305. As an example, if the current user and the target user are users who follow each other, the current user may proceed to the chat window with the target user by clicking the chat entry 305, for example.

Based on this approach, the embodiments of the present disclosure may reduce the interaction learning cost of the user by reusing the existing chat entry.

In some other embodiments, in order to facilitate other users to perceive whether the target user has posted the corresponding virtual object, the electronic device 110 may also, for example, present an indicator about the virtual object being posted in the interface 300A. As an example, the electronic device 110 may present an indicator (for example, an avatar frame of a specific color style) in association with the visual identification (for example, the avatar) of the target user to indicate that the target user has posted the corresponding virtual object.

Further, as shown in FIG. 3B, the electronic device 110 may present description information about the virtual object of the target user in the interface 300B, including but not limited to: a visual identification (for example, an avatar), a text identification (for example, a nickname), etc.

Further, the electronic device 110 may also provide a message 310 from the virtual object. The message 310 may be generated using the target model as mentioned above, or it may also be a predetermined greeting message.

In some embodiments, the electronic device 110 may also provide a set of recommended interaction items for guiding the current user to interact with the virtual object in the interface 300B, such as an interaction item 315-1, an interaction item 315-2, and an interaction item 315-3 (individually or collectively referred to as an interaction item 315). The interaction item 315 may be used to help the current user to quickly interact with the virtual object.

In some embodiments, the interaction item 315 may be generated by the target model as mentioned above, or it may also be generated based on the interaction between other users and the virtual object, or it may also include a predetermined interaction item.

In some embodiments, the interface 300B may further include an input control 320 to support the current user to input an appropriate type of message to this chat. As an example, as shown in FIG. 3C, the electronic device 110 may receive a message 325 input by the current user, and may accordingly provide a message 330 from the virtual object. As discussed above, the message 330 may be generated based on the message 325.

It should be understood that the message 325 and/or the message 330 may include any appropriate type of message, such as a text message, an audio message, an image message, and the like. The present disclosure is not intended to limit the type of message and the specific input approach.

Based on this approach, the embodiments of the present disclosure may support other users to interact with the virtual object of the target user, thereby improving the timeliness of message response.

In some embodiments, the electronic device 110 may also support the current user to have a media conversation with the virtual object, for example. Specifically, the electronic device 110 may establish a media conversation between the current user and the virtual object based on a media conversation request of the current user. As an example, the media conversation includes a video conversation or an audio conversation.

For example, the current user may initiate an audio conversation request or a video conversation request with the virtual object through the input control 320 or other appropriate control. Further, the electronic device 110 may establish a real-time audio conversation or a real-time video conversation between the current user and the virtual object.

In some embodiments, during the media conversation, the electronic device 110 may provide video content and/or audio content from the virtual object in the chat window. For example, the virtual object may generate a real-time audio response based on the audio content input by the current user during the audio conversation.

As an example, the audio response may, for example, have an acoustic feature associated with the target user. For example, the target user may configure a tone of the virtual object in the audio conversation. Alternatively, the tone may be determined based on an audio and video work uploaded by the target user or an audio clip recorded by the target user.

As another example, during the video conversation, a video response from the virtual object may include an audio part and an image part, for example, and the audio part may be similar to the audio part of the audio conversation as introduced above. The image part may be generated based on the visual identification of the virtual object, for example, which may include an animation generated based on a three-dimensional model of the virtual object, and the animation may match the corresponding audio part, for example.

Based on this approach, the embodiments of the present disclosure may improve the sense of reality in interacting with the virtual object, thereby enhancing the interaction effect.

### EXAMPLE PROCESSES

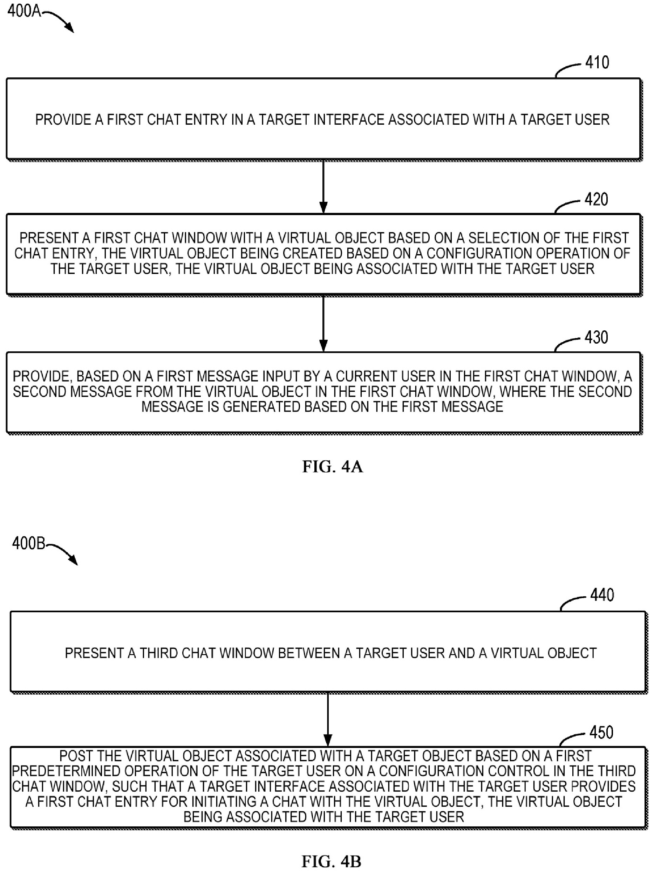

FIG. 4A shows a flowchart of an example process 400A of interaction according to some embodiments of the present disclosure. The process 400A may be implemented at the electronic device 110. The process 400A will be described below with reference to FIG. 1.

As shown in FIG. 4A, at block 410, the electronic device 110 provides a first chat entry in a target interface associated with a target user.

At block 420, the electronic device 110 presents a first chat window with a virtual object based on a selection of the first chat entry, the virtual object being created based on a configuration operation of the target user, the virtual object being associated with the target user.

At block 430, the electronic device 110 provides a second message from the virtual object in the first chat window based on a first message input by a current user in the first chat window, where the second message is generated based on the first message.

In some embodiments, the virtual object is created based on associated information of the target user indicated by the configuration operation.

In some embodiments, the associated information of the target user includes at least one of: text information associated with the target user, audio information associated with the target user, video information associated with the target user.

In some embodiments, presenting the first chat window with the virtual object based on the selection of the first chat entry includes: presenting the first chat window with the virtual object based on the selection of the first chat entry in response to an interaction relationship between the current user and the target user satisfying a first predetermined condition.

In some embodiments, the process 400A further includes: presenting a second chat window with the target user based on the selection of the first chat entry in response to the interaction relationship between the current user and the target user satisfying a second predetermined condition.

In some embodiments, the second message is generated by a target model based on the first message, and the target model is trained based on the associated information of the target user.

In some embodiments, the associated information of the target user is obtained based on at least one of: reference information determined by the target user, historical dialogue information between the target user and the virtual object.

In some embodiments, the process 400A further includes: establishing a media conversation between the current user and the virtual object based on a media conversation request of the current user, the media conversation including a video conversation or an audio conversation.

In some embodiments, during the media conversation, the first chat window is configured to provide video content and/or audio content from the virtual object.

In some embodiments, the process 400A further includes: triggering a client associated with the target user to present a message viewing interface, the message viewing interface displaying a first set of dialogue messages between the current user and the virtual object.

In some embodiments, the target interface includes a personal homepage of the target user.

In some embodiments, the virtual object is associated with a target visual identification, where the target visual identification is an object visual identification of a target object, the target visual identification is generated based on the object visual identification, or the target visual identification is configured by the target object.

FIG. 4B shows a flowchart of an example process 400B of interaction according to some embodiments of the present disclosure. The process 400B may be implemented at the electronic device 110. The process 400B will be described below with reference to FIG. 1.

As shown in FIG. 4B, at block 440, the electronic device 110 presents a third chat window between a target user and a virtual object.

At block 450, the electronic device 110 posts the virtual object associated with a target object based on a first predetermined operation of the target user on a configuration control in the third chat window, such that a target interface associated with the target user provides a first chat entry for initiating a chat with the virtual object, the virtual object being associated with the target user.

In some embodiments, the virtual object is created based on associated information of the target user indicated by a configuration operation.

In some embodiments, the associated information of the target user includes at least one of: text information associated with the target user, audio information associated with the target user, video information associated with the target user.

In some embodiments, the virtual object is configured to provide a message generated based on a target model, and the target model is trained based on the associated information of the target user.

In some embodiments, the associated information of the target user is obtained based on at least one of: reference information determined by the target user, historical dialogue information between the target user and the virtual object.

In some embodiments, the historical dialogue information includes a second set of dialogue messages between the target user and the virtual object in the third chat window.

In some embodiments, the process 400B further includes: obtaining configuration information of the target user about the virtual object, the configuration information indicating at least one of: whether the virtual object is allowed to actively send a message to a user, whether the virtual object is allowed to reply to a message from the user, whether the virtual object is allowed to establish a media conversation with the user.

In some embodiments, the process 400B further includes: presenting a message viewing interface for displaying a third set of dialogue messages between at least one user and the virtual object.

In some embodiments, the process 400B further includes: presenting a fourth chat window between the target user and the at least one user based on a second predetermined operation of the target user in the message viewing interface.

In some embodiments, the second predetermined operation indicates a selection of at least one message from the third set of dialogue messages, and the fourth chat window presents a reference to the at least one message.

In some embodiments, the virtual object is associated with a target visual identification, where the target visual identification is an object visual identification of a target object, the target visual identification is generated based on the object visual identification, or the target visual identification is configured by the target object.

In some embodiments, the target interface also presents an indication element of the virtual object being posted.

### EXAMPLE APPARATUSES AND DEVICES

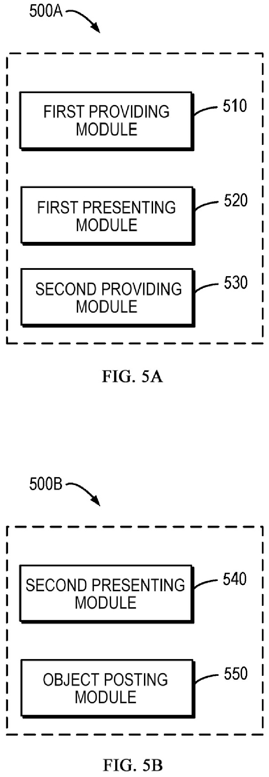

The embodiments of the present disclosure also provide corresponding apparatuses for implementing the above methods or processes. FIG. 5A shows a schematic structural block diagram of an apparatus 500A for interaction according to some embodiments of the present disclosure. The apparatus 500A may be implemented as or included in the electronic device 110. Each module/component in the apparatus 500A may be implemented by hardware, software, firmware, or any combination thereof.

As shown in FIG. 5A, the apparatus 500A includes a first providing module 510, a first presenting module 520, and a second providing module 530. The first providing module 510 is configured to provide a first chat entry in a target interface associated with a target user. The first presenting module 520 is configured to present a first chat window with a virtual object based on a selection of the first chat entry. The virtual object is created based on a configuration operation of the target user, and the virtual object is associated with the target user. The second providing module 530 is configured to provide a second message from the virtual object in the first chat window based on a first message input by a current user in the first chat window. The second message is generated based on the first message.

In some embodiments, the virtual object is created based on associated information of the target user indicated by the configuration operation.

In some embodiments, the associated information of the target user includes at least one of: text information associated with the target user, audio information associated with the target user, video information associated with the target user.

In some embodiments, the first presenting module 520 is further configured to: present the first chat window with the virtual object based on the selection of the first chat entry in response to an interaction relationship between the current user and the target user satisfying a first predetermined condition.

In some embodiments, the first presenting module 520 is further configured to: present a second chat window with the target user based on the selection of the first chat entry in response to the interaction relationship between the current user and the target user satisfying a second predetermined condition.

In some embodiments, the second message is generated by a target model based on the first message, and the target model is trained based on associated information of the target user.

In some embodiments, the associated information of the target user is obtained based on at least one of: reference information determined by the target user, historical dialogue information between the target user and the virtual object.

In some embodiments, the apparatus 500A further includes a conversation module configured to: establish a media conversation between the current user and the virtual object based on a media conversation request of the current user, the media conversation including a video conversation or an audio conversation.

In some embodiments, during the media conversation, the first chat window is configured to provide video content and/or audio content from the virtual object.

In some embodiments, the apparatus 500A further includes a control module configured to: cause a client associated with the target user to present a message viewing interface, the message viewing interface displaying a first set of dialogue messages between the current user and the virtual object.

In some embodiments, the target interface includes a personal homepage of the target user.

In some embodiments, the virtual object is associated with a target visual identification, where the target visual identification is an object visual identification of a target object, the target visual identification is generated based on the object visual identification, or the target visual identification is configured by the target object.

The embodiments of the present disclosure also provide corresponding apparatuses for implementing the above methods or processes. FIG. 5B shows a schematic structural block diagram of an apparatus 500B for interaction according to some embodiments of the present disclosure. The apparatus 500B may be implemented as or included in the electronic device 110. Each module/component in the apparatus 500B may be implemented by hardware, software, firmware, or any combination thereof.

As shown in FIG. 5B, the apparatus 500B includes a second presenting module 540 and an object posting module 550. The second presenting module 540 is configured to present a third chat window between a target user and a virtual object. The object posting module 550 is configured to post the virtual object associated with a target object based on a first predetermined operation of the target user on a configuration control in the third chat window, such that a target interface associated with the target user provides a first chat entry for initiating a chat with the virtual object, the virtual object being associated with the target user.

In some embodiments, the virtual object is created based on associated information of the target user indicated by a configuration operation of the target object.

In some embodiments, the associated information of the target user includes at least one of: text information associated with the target user, audio information associated with the target user, video information associated with the target user.

In some embodiments, the virtual object is configured to provide a message generated based on a target model, and the target model is trained based on associated information of the target object.

In some embodiments, the associated information of the target object is obtained based on at least one of: reference information posted by the target user, and historical dialogue information between the target user and the virtual object.

In some embodiments, the historical dialogue information includes a second set of dialogue messages between the target user and the virtual object in the third chat window.

In some embodiments, the apparatus 500B further includes a configuration module configured to: obtain configuration information of the target user about the virtual object, the configuration information indicating at least one of: whether the virtual object is allowed to actively send a message to a user, whether the virtual object is allowed to reply to a message from the user, whether the virtual object is allowed to establish a media conversation with the user.

In some embodiments, the apparatus 500B further includes a second presenting module configured to: present a message viewing interface for displaying a third set of dialogue messages between at least one user and the virtual object.

In some embodiments, the apparatus 500B further includes a third presenting module configured to: present a fourth chat window between the target user and the at least one user based on a second predetermined operation of the target user in the message viewing interface.

In some embodiments, the second predetermined operation indicates a selection of at least one message from the third set of dialogue messages, and the fourth chat window presents a reference to the at least one message.

In some embodiments, the virtual object is associated with a target visual identification, where the target visual identification is an object visual identification of a target object, the target visual identification is generated based on the object visual identification, or the target visual identification is configured by the target object.

In some embodiments, the target interface also presents an indication element of the virtual object being posted.

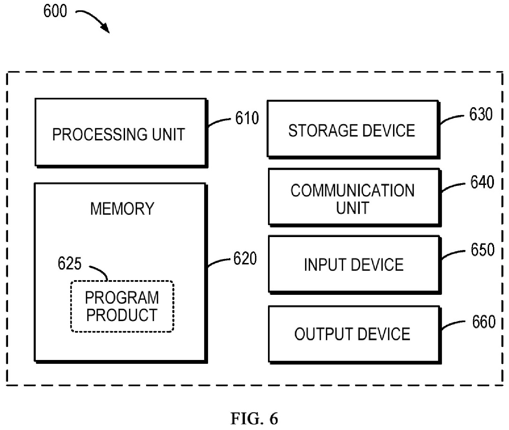

FIG. 6 shows a block diagram of an electronic device 600 in which one or more embodiments of the present disclosure may be implemented. It should be understood that the electronic device 600 shown in FIG. 6 is only illustrative, and should not constitute any limitation on the function and scope of the embodiments described herein. The electronic device 600 shown in FIG. 6 may be used to implement the electronic device 110 in FIG. 1.

As shown in FIG. 6, the electronic device 600 is in the form of a general electronic device. The components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor, and may execute various processes based on the programs stored in the memory 620. In a multi-processor system, multiple processing units execute computer executable instructions in parallel to improve the parallel processing capability of the electronic device 600.

The electronic device 600 typically includes multiple computer storage medium. Such medium may be any available medium accessible by the electronic device 600, including, but not limited to, volatile and non-volatile medium, removable and non-removable medium. The memory 620 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 630 may be a removable or non-removable medium, and may include a machine-readable medium such as a flash drive, a disk, or any other medium, which may be used to store information and/or data and may be accessed within the electronic device 600.

The electronic device 600 may further include additional removable/non-removable, volatile/non-volatile memory medium. Although not shown in FIG. 6, a disk drive for reading from or writing into a removable, non-volatile disk (such as a "floppy disk"), and an optical disk drive for reading from or writing into a removable, non-volatile optical disk may be provided. In these cases, each drive may be connected to the bus (not shown) by one or more data medium interfaces. The memory 620 may include a computer program product 625 having one or more program modules configured to perform various methods or acts of various embodiments of the present disclosure.

The communication unit 640 enables communication with other electronic devices through the communication medium. Additionally, the functions of the components of the electronic device 600 may be implemented by a single computing cluster or multiple computing machines, these computing machines may communicate through communication connections. Therefore, the electronic device 600 may use a logical connection with one or more other servers, a network personal computer (PC) or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may also communicate with one or more external devices (not shown) such as a storage device, a display device, etc., with one or more devices that enable the user to interact with the electronic device 600, or with any devices (such as a network card, a modem, etc.) that enable the electronic device 600 to communicate with one or more other electronic devices, through the communication unit 640, as needed. Such communication may be performed via input/output (I/O) interfaces (not shown).

According to an example implementation of the present disclosure, there is provided a computer-readable storage medium having computer executable instructions stored thereon, where the computer executable instructions are executed by a processor to implement the method described above. According to an example implementation of the present disclosure, there is also provided a computer program product tangibly stored on a non-transitory computer-readable medium and including computer executable instructions, where the computer executable instructions are executed by a processor to implement the method described above.

Various aspects of the present disclosure are described herein with reference to the flowchart(s) and/or block diagram(s) of the method, apparatus, device and computer program product implemented according to the present disclosure. It should be understood that each block of the flowchart(s) and/or block diagram(s), and the combination of various blocks in the flowchart(s) and/or block diagram(s), may be implemented by computer-readable program instructions.

These computer-readable program instructions may be provided to a processing unit of a general computer, a special computer or other programmable data processing apparatus to produce a machine, so that these instructions, when executed by the processing unit of the computer or other programmable data processing apparatus, produce an apparatus that implements the functions/actions specified in one or more blocks of the flowchart(s) and/or block diagram(s). These computer-readable program instructions may also be stored in the computer-readable storage medium, and these instructions make the computer, the programmable data processing apparatus and/or other devices work in a specific way, so that the computer-readable medium storing the instructions includes a manufactured product, which includes instructions to implement various aspects of the functions/actions specified in one or more blocks of the flowchart(s) and/or block diagram(s).

The computer-readable program instructions may be loaded onto the computer, other programmable data processing apparatus, or other devices, so that a series of operation steps are performed on the computer, other programmable data processing apparatus, or other devices to produce a computer-implemented process, so that the instructions executed on the computer, other programmable data processing apparatus, or other devices implement the functions/actions specified in one or more blocks of the flowchart(s) and/or block diagram(s).

The flowcharts and block diagrams in the drawings show the architecture, functions and operations of the system, method and computer program product that may be implemented according to multiple implementations of the present disclosure. In this regard, each block in the flowcharts or block diagrams may represent a module, program segment or part of instruction, and the module, program segment or part of instruction contains one or more executable instructions for implementing the specified logical function. In some alternative implementations, the functions marked in the blocks may also occur in a different order from that marked in the drawings. For example, two consecutive blocks may actually be performed substantially in parallel, or they may sometimes be performed in the reverse order, depending on the functions involved. It should also be noted that each block in the block diagrams and/or the flowcharts, and combination(s) of the blocks in the block diagrams and/or the flowcharts, may be implemented by a dedicated hardware-based system that performs specified functions or actions, or may be implemented by a combination of dedicated hardware and computer instructions.

The implementations of the present disclosure have been described above, and the above description is illustrative, not exhaustive, and is not limited to the disclosed implementations. Without departing from the scope and spirit of the illustrated implementations, many modifications and changes will be apparent to those of ordinary skill in the art. The choice of terms used herein is intended to best explain the principles of each implementation, the practical applications or improvements to the technology in the market, or to enable other ordinary skilled people in the art to understand the various implementations disclosed herein.

## Claims

1. A method for interaction, comprising:
providing a first chat entry in a target interface associated with a target user;
presenting a first chat window with a virtual object based on a selection of the first chat entry, the virtual object being created based on a configuration operation of the target user, the virtual object being associated with the target user; and
providing, based on a first message input by a current user in the first chat window, a second message from the virtual object in the first chat window, wherein the second message is generated based on the first message.

2. The method of claim 1, wherein the virtual object is created based on associated information of the target user indicated by the configuration operation.

3. The method of claim 2, wherein the associated information of the target user comprises at least one of:
text information associated with the target user,
audio information associated with the target user,
video information associated with the target user.

4. The method of claim 1, wherein presenting the first chat window with the virtual object based on the selection of the first chat entry comprises:
presenting the first chat window with the virtual object based on the selection of the first chat entry in response to an interaction relationship between the current user and the target user satisfying a first predetermined condition.

5. The method of claim 4, further comprising:
presenting a second chat window with the target user based on the selection of the first chat entry in response to the interaction relationship between the current user and the target user satisfying a second predetermined condition.

6. The method of claim 1, wherein the second message is generated by a target model based on the first message, and the target model is trained based on associated information of the target user.

7. The method of claim 6, wherein the associated information of the target user is obtained based on at least one of:
reference information determined by the target user,
historical dialogue information between the target user and the virtual object.

8. The method of claim 1, further comprising:
establishing a media conversation between the current user and the virtual object based on a media conversation request of the current user, the media conversation comprising a video conversation or an audio conversation.

9. The method of claim 8, wherein during the media conversation, the first chat window is configured to provide video content and/or audio content from the virtual object.

10. The method of claim 1, further comprising:
triggering a client associated with the target user to present a message viewing interface, the message viewing interface displaying a first set of dialogue messages between the current user and the virtual object.

11. The method of claim 1, wherein the target interface comprises a personal homepage of the target user.

12. The method of claim 1, wherein the virtual object is associated with a target visual identification,
wherein the target visual identification is an object visual identification of a target object, the target visual identification is generated based on the object visual identification, or the target visual identification is configured by the target object.

13. A method of interaction, comprising:
presenting a third chat window between a target user and a virtual object; and
posting the virtual object associated with a target object based on a first predetermined operation of the target user on a configuration control in the third chat window, such that a target interface associated with the target user provides a first chat entry for initiating a chat with the virtual object, the virtual object being associated with the target user.

14. The method of claim 13, wherein the virtual object is created based on associated information of the target user indicated by a configuration operation of the target object.

15. The method of claim 14, wherein the associated information of the target user comprises at least one of:
text information associated with the target user,
audio information associated with the target user,
video information associated with the target user.

16. The method of claim 13, wherein the virtual object is configured to provide a message generated based on a target model, and the target model is trained based on associated information of the target user.

17. The method of claim 16, wherein the associated information of the target user is obtained based on at least one of:
reference information determined by the target user,
historical dialogue information between the target user and the virtual object.

18. The method of claim 17, wherein the historical dialogue information comprises a second set of dialogue messages between the target user and the virtual object in the third chat window.

19. The method of claim 13, further comprising:
obtaining configuration information of the target user about the virtual object, the configuration information indicating at least one of:
whether the virtual object is allowed to reply to a message from a user,
whether the virtual object is allowed to establish a media conversation with the user.

20. The method of claim 13, further comprising:
presenting a message viewing interface for displaying a third set of dialogue messages between at least one user and the virtual object.

21. The method of claim 20, further comprising:
presenting a fourth chat window between the target user and the at least one user based on a second predetermined operation of the target user in the message viewing interface.

22. The method of claim 21, wherein the second predetermined operation indicates a selection of at least one message from the third set of dialogue messages, and the fourth chat window presents a reference to the at least one message.

23. The method of claim 13, wherein the virtual object is associated with a target visual identification,
wherein the target visual identification is an object visual identification of the target object, the target visual identification is generated based on the object visual identification, or the target visual identification is configured by the target object.

24. The method of claim 13, wherein the target interface further presents an indication element of the virtual object being posted.

25. An apparatus for interaction, comprising:
a first providing module configured to provide a first chat entry in a target interface associated with a target user;
a first presenting module configured to present a first chat window with a virtual object based on a selection of the first chat entry, the virtual object being created based on a configuration operation of the target user, the virtual object being associated with the target user; and
a second providing module configured to provide, based on a first message input by a current user in the first chat window, a second message from the virtual object in the first chat window, wherein the second message is generated based on the first message.

26. An apparatus for interaction, comprising:
a second presenting module configured to present a third chat window between a target user and a virtual object; and
an object posting module configured to post the virtual object associated with a target object based on a first predetermined operation of the target user on a configuration control in the third chat window, such that a target interface associated with the target user provides a first chat entry for initiating a chat with the virtual object, the virtual object being associated with the target user.

27. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 12 or 13 to 24.

28. A computer-readable storage medium having a computer program stored thereon, the computer program being executable by a processor to implement the method of any of claims 1 to 12 or 13 to 24.
